# EUROPÄISCHE PATENTANMELDUNG

(11) **EP 1 241 768 A2**
(43) Veröffentlichungstag der Anmeldung: **18.09.2002**
(21) Anmeldenummer: 02001299.3
(22) Anmeldetag: 18.01.2002
(51) Int. Cl.: H02J 7/14, H02H 9/04

(54) **Anordnung und Verfahren zum Schutz eines Mehrspannungsbordnetzes gegen Spannungsüberschläge zwischen verschiedenen Spannungsebenen sowie gegen Verpolung von aussen**

(30) Priorität: 17.03.2001 DE 10113081
(71) Anmelder: DaimlerChrysler AG, 70567 Stuttgart (DE)
(72) Erfinder: Binder, Thomas, 70565 Stuttgart (DE); Mauser, Roland, 71640 Ludwigsburg (DE); Mäckel, Rainer, Dr.-Ing., 53639 Königswinter (DE); Schmidt, Fritz, Dr., 71332 Waiblingen (DE); Stege, Manfred, Dr.-Ing., 63225 Langen (DE)

(57) **Zusammenfassung**

Anordnung und Verfahren zum Schutz eines Mehrspannungsbordnetzes gegen Spannungsüberschläge zwischen den verschiedenen Spannungsebenen, bei dem die Spannung in der Niederspannungsebene des Bordnetzes mittels eines Spannungsbegrenzers solange auf dem Niederspannungswert geklemmt wird, bis ein Batterietrennschalter in der Hochspannungsebene des Bordnetzes geöffnet wird und der Generator in der Hochspannungsebene an seinem Ausgang auf den Spannungswert der Niederspannungsebene zurückgeregelt ist. Hierdurch wird die Hochspannungsebene des Bordnetzes von den Hochspannungsquellen getrennt. Hierdurch wird eine Anhebung der Spannung in der Niederspannungsebene auch bei einem Kurzschluß zwischen den beiden Spannungsebenen des Bordnetzes unterbunden und die Verbraucher in der Niederspannungsebene können weiterhin sicher betrieben werden.

## Beschreibung

Die Erfindung betrifft eine Anordnung und ein Verfahren mit den Merkmalen der unabhängigen Ansprüche.

Eine Vorrichtung und ein Verfahren zum Überspannungschutz eines Einspannungsbordnetzes ist aus der DE 197 10 073 A1 bekannt. Parallel zum Generatorausgang ist eine Überspannungsschutzvorrichtung zum Schutz der im Bordnetz befindlichen elektrischen Verbraucher angeschlossen. Die Überspannungschutzvorrichtung enthält eine Begrenzungseinheit für die Bordnetzspannung. Der Schwellwert der Begrenzungseinheit liegt oberhalb der Generatorspannung. Überschreitet die Bordnetzspannung diesen Schwellwert wird der Generatorausgang auf den Schwellwert mit Hilfe eines parallelen Opferverbrauchers geklemmt und gleichzeitig die Generatorspannung heruntergeregelt. Hierdurch werden empfindliche Halbleiterbauelemente gegen Bordnetzüberspannungen geschützt.

In Bordnetzen mit mehreren Spannungsebenen, z.B. ein Zweispannungsbordnetz 42V/14V, kann es neben Kurzschlüssen der einzelnen Bordnetze gegen Masse hin auch zu Spannungsüberschlägen, Kurzschlüssen oder Verpolungen zwischen zwei Spannungsebenen des Bordnetzes kommen. Der zeitliche Verlauf sowie die Absolutwerte der Spannungen in den verschiedenen Spannungsebenen des Bordnetzes ist bei einem Spannungsüberschlag zwischen den Spannungsebenen von vielen Faktoren abhängig. Hierzu zählen unter anderen die Anzahl, Größe, Art und Technologie der im Bordnetz befindlichen Batterien, deren Ladezustand und Alterungszustand, Art und Anzahl im Bordnetz befindlicher Konatktwiderstände, Leistungswiderstände, Art und Anzahl der zwischen den Spannungsebenen geschalteten Elemente sowie der Ort und die Stärke des Spannungsüberschlages im Bordnetz. Insbesondere der Ort eines unbeabsichtigten Spannungskopplung im Bordnetz hat einen großen Einfluß auf die sich dann einstellende Spannungsverteilung. Da sich der Ort einer Spannungskopplung oder eines Kurzschlusses im Bordnetz nicht vorhersagen läßt, lassen sich in bekannten Mehrspannungsbordnetzen die Folgen eines Spannungsüberschlages zwischen den Spannungsebenen auch nicht vorhersagen. Zwar sind in der Regel die einzelnen Spannungsebenen gegen einen Massekurzschluß abgesichert, diese Absicherung hilft jedoch bei einem Kurzschluß zwischen den Spannungsebenen nur in unzureichendem Ausmaß, wenn insbesondere in einem Kraftfahrzeug sicherheitskritische Steuergeräte wie ESP-Steuergeräte, Airbag-Steuergeräte, ABS-Steuergeräte vorhanden sind, deren zuverlässiges Funktionieren auch im Falle eines Spannungsüberschlages sichergestellt sein muß. Abhängig von dem sich einstellenden örtlichen Spannungspotential, können Verbraucher im Bordnetz abhängig von ihrer Auslegung auf Niederspannung oder Hochspannung in einen Überspannungszustand oder einen Unterspannungszustand gelangen. Im Fall der zuvor erwähnten sicherheitsrelevanten Steuergeräte ist dann mit einem Funktionsverlust für diese Steuergeräte zu rechnen.

Befinden sich sowohl in der Hochspannungsebene eine Hochspannungsbatterie als auch in der Niedespannungsebene eine Niederspannungsbatterie wird ein unbeherrschter Spannungsüberschlag zwischen den beiden Spannungsebenen des Bordnetzes noch gefährlicher. Durch die dann vorhandene Kopplung zweier Batterien unterschiedlichen Spannungsniveaus können hohe Ausgleichsströme fließen, die jedes Bauteil des Bordnetzes einschließlich der Batterien selbst zerstören können.

Koppelt z.B. die höhere Spannungsebene in Folge eines Kurzschlusses auf eine Leitung der Niederspannungsebene und auf einen hier angeschlossenen Halbleiterschalter auf MOS- Basis und der mit dem Schalter angesteuerten Last in der Niederspannungsebene, so wird die üblicherweise vorhandene Inversdiode des MOS-Schalters zerstört und die angeschlossene Last schaltet unkontrolliert ein. Je nach Art der dann unkontrolliert eingeschalteten Last kann es, insbesondere in Kraftfahrzeugen, dann zu unvorhersehbaren Fahrzuständen kommen, was untollerierbar ist.

Die gleichen zuvor beschriebenen Gefahren treten auf, wenn z.B. in Folge einer Verpolung oder einer Verwechslung ein Hochspannungsnetzteil an die Niederspannungsebene angeschlossen wird. Solche Verwechslungsgefahr besteht zum Beispiel immer beim externen-Aufladen von Fahrzeugbatterien oder beim Inanspruchnehmen von externer Starthilfe.

Es ist daher das Ziel dieser Erfindung, Mehrspannungsbordnetze gegen unkontrollierte Spannungskopplung zwischen den verschiedenen Spannungsebenen des Bordnetzes sicherer zu machen.

Erfindungsgemäß wird diese Aufgabe gelöst durch die Merkmale der unabhängigen Ansprüche. Weitere vorteilhafte Ausführungsformen sind in den Unteransprüchen enthalten.

Die Lösung gelingt, indem die Spannung in der Niederspannungsebene des Bordnetzes mittels eines Spannungsbegrenzers im Falle einer Spannungskopplung zwischen der Hochspannungsebene und der Niederspannungsebene solange auf dem Niederspannungswert geklemmt wird, bis ein Batterietrennschalter in der Hochspannungsebene des Bordnetzes geöffnet wird und der Generator in der Hochspannungsebene an seinem Ausgang zumindest auf den Spannungswert der Niederspannungsebene zurückgeregelt ist. Noch gößere Betriebssicherheit für die Niederspannungsebene erzielt man, wenn der Generatorausgang vollständig abgeregelt wird. Hierdurch wird die Hochspannungsebene des Bordnetzes von den Hochspannungsquellen getrennt. Hierdurch wird weiter eine Anhebung der Spannung in der Niederspannungsebene auch bei einem Kurzschluß zwischen den beiden Spannungsebenen des Bordnetzes unterbunden und die Verbraucher in der Niederspannungsebene können weiterhin sicher betrieben werden.

### Mit der Erfindung werden hauptsächlich die folgenden Vorteile erzielt:

Zweispannungsbordnetze in Kraftfahrzeugen werden deshalb vorgesehen, um leistungsstarke Verbraucher, wie z. B. Heckscheibenheizung, Sitzheizungen, Motorzusatzheizungen, elektrische Antriebsmotoren u.s.w. mit einer Hochspannungsebene versorgen zu können, während elektronische Steuergeräte, die vornehmlich mit Halbleiterbauelemente aufgebaut sind, weiterhin mit einer zweiten Niederspannungsebene versorgt werden können. Zweispannungsbordnetze bieten zudem für sicherheitskritische Funktionen im Kraftfahrzeug, wie z. B. ESP-Systeme, ABS-Systeme oder Airbagsteuergeräte den Vorteil einer möglichen zweiten und redundanten Rückfallebene, falls im Bordnetz eine Spannungsebene ausfällt.

Mit der Erfindung gelingt es nun eine zweite Niederspannungsebene nicht nur gegen einen Massekurzschluß abzusichern, sondern auch gegen einen möglichen Spannungskopplung zwischen den verschiedenen Spannungsebenen eines Mehrspannungsbordnetzes. Damit wird es durch die Erfindung mit Vorteil möglich, die sicherheitsrelevanten elektrischen und elektronischen Komponenten eines Kraftfahrzeuges in der Niederspannungsebene anzuschließen und die Betriebssicherheit des Fahrzeuges durch die Absicherung der Niederspannungsebene weiter zu verbessern.

Werden an das Mehrspannungsbordnetz externe Spannungsquellen angeschlossen, z.B. zum Aufladen der Batterie in der Hochspannungsebene, so besteht die Gefahr, daß die externe Hochspannungsquelle an die Niederspannungsebene des Bordnetzes irrtümlich angeschlossen wird. In diesem Fall wären in herkömmlichen Zweispannungsbordnetzes umfangreiche Schäden, insbesondere von Halbleiterbauelementen, zu befürchten, die umfangreiche Reparaturen nach sich ziehen würden. Die Erfindung schützt hier mit Vorteil die Niederspannungsebene des Bordnetzes gegen solche Verpolungsschäden.

Heutige Bordnetze in Kraftfahrzeugen haben ein Bordnetzmanagement, das die zur Verfügung stehenden Leistungsreserven nach einer Prioritätenliste an die Verbraucher im Bordnetz verteilt. Bekannte Bordnetze haben deshalb ein Bordnetzsteuergerät, das in der Lage ist, Verbraucher im Bordnetz gezielt ein und aus zu schalten. Diese Funktionalität eines Bordnetzsteuergerätes wird auch in Mehrspannungsbordnetzen eingesetzt. Im Zusammenhang mit dieser Erfindung kann nun diese Funktionalität bekannter Bordnetzsteuergeräte mit Vorteil erweitert werden, um im Falle einer Spannungskopplung zwischen den beiden Spannungsebenen eines Zweispannungsbordnetzes, den Ort des unerwünschten Spannungsüberschlages im Bordnetz zu lokalisieren. Hierzu wird zunächst die gesamte Hochspannungsebene des Bordnetzes mit allen Verbrauchern und Leistungszweigen ausgeschaltet. Dann werden die einzelnen Leistungszweige in der Hochspannungsebene einer nach dem anderen entsprechend einer Prioritätenliste vom Bordnetzsteuergerät eingeschaltet und zeitgleich parallel dazu wird nach jedem Einschalten eines Leistungszweiges in der Hochspannungsebene mit der Spannungsbregenzungseinheit in der Niederspannungsebene überprüft, ob die Spannung in der Niederspannungsebene über den zulässigen Nennwert ansteigt. Steigt die Spannung in der Niederspannungsebene über diese Nennspannung inclusive eines Toleranzbereiches an, so ist der unerwünschte Spannungsüberschlag bzw. der Kurzschluß zwischen den beiden Spannungsebenen, in dem Leistungszweig der Hochspannungsebene zu suchen, der als letzter vom Bordnetzsteuergerät eingeschaltet wurde. Hierdurch wird das Mehrspannungsbordnetz diagnosefähig und das Bordnetzsteuergerät um eine Diagnosefunktion zur Lokalisierung unerwünschter Spannungsüberschläge zwischen den verschiedenen Spannungsebenen des Bordnetzes erweitert.

Ausführungsbeispiele der Erfindung werden im folgenden anhand von Zeichnungen dargestellt und näher erläutert. Es zeigen:
- Fig.1: schematisch ein Mehrspannungsbordnetz in Form eines 42V/14V Zweispannungsbordnetzes mit erfindungsgemäßen Spannungsbegrenzung für die Niederspannungsebene,
- Fig. 2: ein mögliches Ausführungsbeispiel eines für die Erfindung geeigneten an sich aus der DE 197 10 073 A1 bekannten Spannungsbegrenzers.

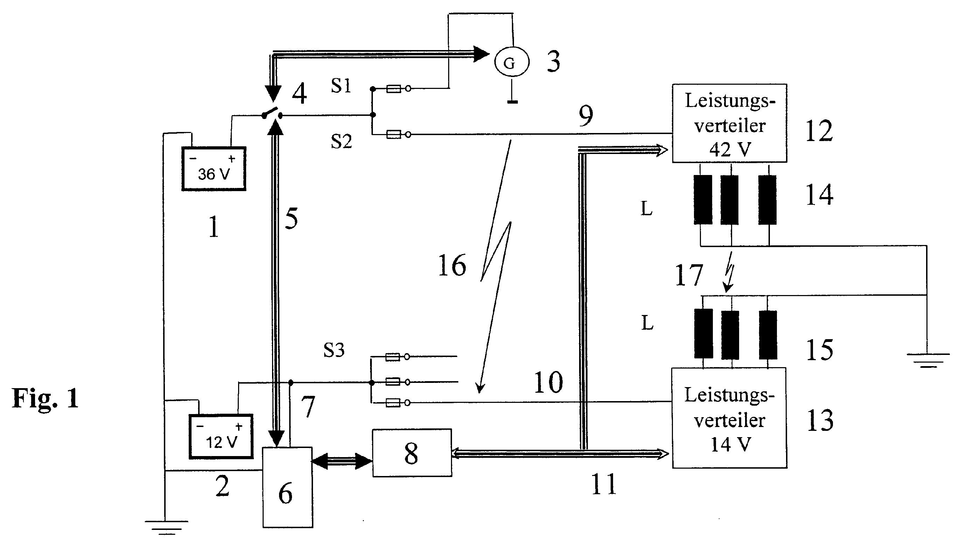

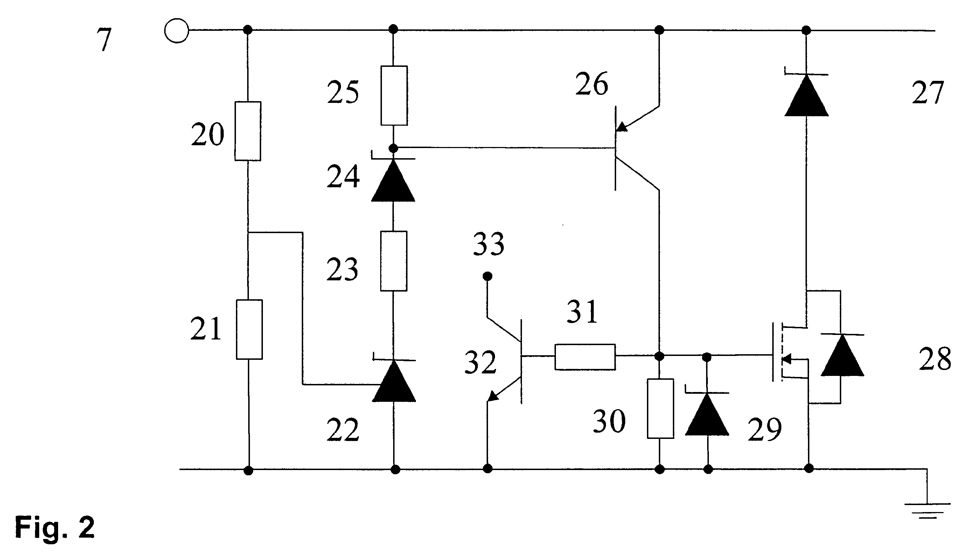

In Fig. 1 ist ein Mehrspannungsbordnetz mit zwei verschiedenen Spannungsebenen U1 und U2 dargestellt. Die Hochspannungsebene U2 besteht aus einer 36 V Batterie 1, einem Starter/Generator 3, einem Batterietrennschalter 4, einer oder mehrerer Hauptversorgungsleitungen 9, die die Leistung des Generators 3 an mindestens einen Hochspannungs-Leistungsverteiler 12 weiterleiten und dieser Hochspannungs-Leistungsverteiler die Generatorleistung auf mehrere Leistungszweige 14 in der Hochspannungsebene verteilt. In den Leistungszweigen 14 befinden sich die Verbraucher L der Hochspannungsebene. Die Normspannung der Hochspannungsebene ist in Kraftfahrzeugen 42 V. Der Hochspannungs-Leistungsverteiler ist gegenüber dem Generator 3 und der Batterie 1 mit einer Sicherung S2 in der Versorgungsleitung 9 abgesichert. Der Generator ist gegen die Batterie mit einer Sicherung S1 abgesichert.

Die Niederspannungsebene U1 besteht aus einer 12V- Batterie 2, die über eine oder mehrere Versorgungsleitungen 10, die jeweils einzeln durch Sicherungen S3 abgesichert sind, mit einem Niederspannungs-Leistungsverteiler 13 verbunden. Der Niederspannungs-Leistungsverteiler verteilt die Leistung in der Niederspannungsebene auf mehrere Leistungszweige 15, in denen sich die Niederspannungsverbraucher befinden. Selbstverständlich wird in einem Kraftfahrzeug auch die Niederspannungsebene eine von der Niederspannungsbatterie unabhängige Spannungsversorgung haben. Z.B. mit einem zusätzlichen Niederspannungsgenerator oder über eine Potentialbrücke zum Hochspannungsgenerator. Für die Erfindung ist die Art einer zusätzlichen Spannungsversorgung der Niederspannungsebene nicht wesentlich. Die Batterie-unabhängige zusätzliche Spannungsversorgung der Niederspannungsebene ist deshalb nicht dargestellt.

Getrennt vom Mehrspannungsbordnetz besteht ein Signalnetz. Bekannte Signalnetze in Kraftfahrzeugen basieren auf der CAN Technologie ( CAN= Controlled Area Network). Auch die hier dargestellte Erfindung macht sich diese bekannte Signalnetz-Technologie zu nutze. Über einen CAN-BUS sind die beiden Leistungsverteiler aus der Hochspannungsebene und der Niederspannungsebene mit Signalleitungen mit einem Bordnetzsteuergerät 8 verbunden. Das Bordnetzsteuergerät ist ebenfalls über Signalleitungen mit dem Generator 3 oder genauer gesagt mit der nicht extra dargestellten Generatorregelung verbunden.

Die Erfindung ergänzt nun das bisher dargestellte Zweispannungsbordnetz um eine Spannungsbegrenzungseinheit 6 in der Niederspannungsebene und um einen angesteuerten Batteriehauptschalter 4 in der Hochspannungsebene sowie um eine von der Spannungsbegrenzungseinheit abhängige Ansteuerung der Generatorregelung. In einer vorteilhaften Ausführungsform der Erfindung ist die Spannungsbegrenzungseeinheit ebenfalls an das Signalnetz und damit an das Bordnetzsteuergerät angeschlossen. Die Spannungsbegrenzungseinheit kann jedoch auch über direkte Steuerleitungen mit dem Bordnetzsteuergerät und/oder dem Batteriehauptschalter verbunden sein, auch wenn direkte Steuerleitungen heutzutage im Zeitalter von BUS-Systemen als nicht mehr zeitgemäß empfunden werden.

Im folgenden wird die Funktion und das Zusammenwirken der einzelnen Bordnetzbestandteilen und Signalnetzbestandteilen näher erläutert.

Im Fall einer unerwünschten Spannungskopplung, - zeichnerisch dargestellt durch Blitze 16, 17- , zwischen den beiden Spannungsebenen U1 und U2, wird die Spannung in der 14 V Niederspannungsebene U1 mittels des Spannungsbegrenzers 6 solange geklemmt, bis der Batterietrennschalter 4 geöffnet wird und der Generator 3 zurückgeregelt oder ganz abgeregelt ist. Hierdurch wird die 42 V Hochspannungsebene von ihren Spannungsquellen getrennt und kann auch im Falle eines Spannungsüberschlages nicht mehr in die 14 V Niederspannungsebene einspeisen. Hierdurch wird eine unerwünschte Anhebung des Spannungsniveaus in der Niederspannungsebene Ul vermieden und die Verbraucher in der 14 V- Niederspannungsebene können weiterhin in einem sicheren Zustand betrieben werden. Weiterhin wird hierdurch die Gefahr für nicht mehr abschaltbare Lasten und Kabel reduziert. Sind in einem Kraftfahrzeug, die für den sicheren Betrieb des Fahrzeuges notwendigen elektrischen Geräte in der Niederspannungsebene des Bordnetzes angeordnet, so kann das Kraftfahrzeug auch im Falle eines Kurzschlusses zwischen den beiden Spannungsbenen weiterhin sicher betrieben werden.

Die Spannungsbegrenzungseinheit 6 misst die Spannung in der 14 V Niederspannungsebene. Erreicht die Spannung einen Schwellwert, so begrenzt die Spannungsbegrenzungseinheit 6 die Spannung, indem ein Leistungszweig in der Signalbegrenzungseinheit selbst in den leitenden Zustand übergeht. Der Spannungsbegrenzer schließt aber nicht die 14 V gegen Massepotential kurz, sondern verhindert nur das Überschreiten einer Spannungsschwelle, indem er den Strom durch den Leistungszweig erhöht. In der Signalbegrenzungeinheit wird also ein Opferverbraucher zugeschaltet, der die über dem erlaubten Schwellwert liegende Spannung aufnimmt.

Die Spannungsbegrenzungseinheit 6 ist über Signalleitungen mit dem Batterietrennschalter 4 sowie mit dem Generator 3 verbunden. Wird die Begrenzungsfunktion ausgelöst, so wird über die Signalleitung ein Signal an den Generator 3, genauer die Generatorregelung und den Batterietrennschalter 4 übertragen. Auf das Signal hin wird der Batterietrennschalter geöffnet und die Hochspannungsbatterie 1 wird von der Hochspannungsebene U2 separiert. Der Generator wird auf das Signal hin heruntergeregelt, so dass er keine Hochspannung mehr in die 14V Niederspannungsebene einspeist.

Eine Alternative ist es, den Generator nicht ganz abzuregeln, sondern auf eine Spannung von 13,5V plus definiertem Offset herunterzuregeln. Somit wird der eventuelle Kurzschluß zwischen den beiden Spannungsebenen nicht mehr versorgt und in der14 V Niederspannungsebene wird die Spannungslage nur über die Niederspannungsbatterie 2 und ggfs. den heruntergeregelten Generator 3 bestimmt.

In einer vorteilhaften Ausführung der Erfindung ist die Spannungsbegrenzungseinheit 6 über eine Signalleitung mit dem Bordnetzsteuergerät 8 verbunden. Bei Ansprechen der Spannungsbegrenzung wird an das Bordnetzsteuergerät ein Signal übertragen. Dieses sorgt dann über ein Wiedereinschaltszenario dafür, dass zunächst alle Lasten in der Hochspannungsebene abgeschaltet werden. Danach kann der Batterietrennschalter 4 geschlossen werden und der Generator wird an seinem Ausgang in der Spannung wieder hochgeregelt. Wird nun wieder eine Spannungserhöhung im 14 V Bordnetz festgestellt, so ist der Kurzschluß nicht zu separieren. Die Quellen in 42V Hochspannungsebene bleiben abgeschaltet bzw. auf das Spannungsniveau der Niederspannungsebene begrenzt. Tritt keine Spannungserhöhung auf, so sind die Verbraucher in den Leistungszweigen der Hochspannungebene sukzessive (evtl. nach einer Prioritätenliste) zuzuschalten. Nach jedem Einschalten eines weiteren Verbrauchers wird dann die Spannungslage im 14 V Netz überprüft. Steigt die Spannung an, so ist der Kurzschluß in dem zuletzt zugeschalteten Leistungszweig lokalisiert und dieser Zweig wird von dem Leistungsverteiler bis zur Beseitigung des Kurzschlusses in einer Fachwerkstadt der DaimlerChrysler AG verriegelt. Taucht beim weiteren Zuschalten der verbleibenden Leistungszweige in der Hochspannungsebene keine weitere Spannungserhöhung in der Niederspannungsebene auf, können die verbleibenden Leistungszweige zugeschaltet werden, die Generatorleistung auf ihren Hochspannungswert hochgeregelt werden und der Batterietrennschalter geschlossen werden. Das gesamte Mehrspannungsbordnetz ist damit bis auf den einen Leistungszweig, in dem der Kurzschluß lokalisiert wurde und der verriegelt wurde, voll betriebsfähig. Das Mehrspannungsbordnetz hat also in dieser vorteilhaften Ausführung, in der die Spannungsbegrenzungseinheit signaltechnisch an das Bordnetzsteuergerät angeschlossen ist, die Fähigkeit zur Selbstdiagnose und die Fähigkeit fehlerhafte Leistungszweige abzuriegeln, so daß die fehlerfreien Leistungszweige mit ihrer Funktionalität erhalten bleiben.

In Fig. 2 ist eine an sich aus der DE 197 10 073 A1 bekannte Ausführungsform einer möglichen Spannungsbegrenzungseinheit 6 dargestellt. Dargestellt ist das Ausführungsbeispiel der Fig. 5 aus der DE 197 10 073 A1. Diese Spannungsbegrenzungseinheit ist für die hier vorgestellte Erfindung, deshalb als eine mögliche Spannungsbegrenzungseinheit ausgewählt worden, weil sie über einen zusätzlichen Signalanschluß 33 verfügt, mit dem ein Kennsignal an das Bordnetzsteuergerät übertragbar ist. Prinzipiel sind jedoch die Spannungsbegrenzungseinheiten der Fig. 3 und Fig. 4 aus der DE 197 10 073 A1 auch für die Erfindung brauchbar. Diese letztgenannten Spannungsbegrenzer müssen lediglich durch einen Signalabgriff z.B. am Gate des MOSFET, der den Opferverbraucher steuert, ergänzt werden.

Im folgenden wird das Zusammenwirken der an sich bekannten Spannungsbegrenzungseinheit mit der Erfindung näher erläutert.

Die Spannungsbegrenzungseinheit wird potentialmäßig in der Niederspannungsebene zwischen Batteriehauptkabel und Masse geschaltet. Hierzu ist die Spannungsbegrenzungseinheit mit ihrem Leistungsanschluß an einer symbolisch gezeigten Klemme 7 angeschlossen und mit ihrer Masseleitung mit der Masse des Mehrspannungsbordnetzes verbunden. Die Spannung in der 14V Niederspannungsebene wird über die beiden Widerstände 20 und 21 heruntergeteilt. Übersteigt diese heruntergeteilte Spannung den Referenzwert der Referenzspannungsquelle 22, so geht diese von einem hochohmigen in einem niederohmigen Zustand über. Dadurch wird ein Stromfluss durch den Widerstand 25 möglich, der Transistor 26 wird aufgesteuert und die Gatespannung an dem MOS-Transistor 28 angehoben. Dieser wird leitend und es stellt sich ein Stromfluss in dem Opferzweig bestehend aus einer oder mehreren parallelgeschalteten Suppressordioden 27 und einem oder mehreren parallelgeschalteten Transistoren 28 ein. Die Gate-Source Spannung des Transistors 28 wird durch diese Schaltung so geregelt, dass der Spannungsabfall über dem Transistor der Differenz zwischen dem vorgegebenen Schwellwert U1 der Niederspannungsebene und dem Spannungsabfall über der Suppressordiode 27 entspricht. Somit werden die Toleranzen, der innenwiderstandsabhängige Spannungsabfall sowie Temperaturabhängigkeiten der Opferverbraucher im Opferzweig ausgeglichen.

Die Elemente 24, 23, 30 und 29 dienen als Schutzbeschaltung und sind für die Funktion nicht unbedingt notwendig.

Wird der Transistor 28 angesteuert, so wird auch gleichzeitig der Transisitor 32 angesteuert und die Spannung am Ausgang 33 kann z.B. über einen sogenannten an sich bekannten nicht extra dargestellten Pull-up-Widerstand als Signal an den Batterietrennschalter, an den Generator bzw. die Generatorregelung und/oder an das Bordnetzsteuergerät weitergeleitet werden.

Ein weiterer Vorteil dieses Aufbaus ist, dass im Verpolfall der 14 V Niederspannungsbene die Spannung im 14 V Bordnetz auch begrenzt wird. In diesem Fall wird der Leistungzweig leitend, indem die Suppressordiode in Vorwärtsrichtung mit einer Einsatzspannung zwischen 0,7 V und 1V betrieben wird und die Inversdiode des Transistors 28 ebenfalls durchschaltet, so dass die Spannung im 14 V Bordnetz zunächst auf Werte um minus 2 V begrenzt wird.

## Patentansprüche

1. Anordnung zum Schutz eines Mehrspannungsbordnetzes gegen Spannungskopplung zwischen einer Hochspannungsebene (U2) und einer Niederspannungsebene (U1) oder gegen Verpolung mit
- einer Spannungsbegrenzungseinheit (6) die potentialmäßig zwischen der Niederspannungsebene (U1) und elektrischer Masse geschaltet ist,
- einem ansteuerbaren Batterietrennschalter (4) in der Hochspannungsebene (U2) und mit einem Generator (3) mit ansteuerbarem Generatorregler,
wobei
die Spannungsbegrenzungseinheit (6), der Batterietrennschalter (4) und die Generatorregelung untereinander mit Signalleitungen verbunden sind
- und die Spannungsbegrenzungseinheit (6) im Falle eines unerwünschten Spannungskopplung von der Hochspannungsebene (U2) auf die Niederspannungsebene (U1) die Spannung in der Niederspannungsebene konstant hält und über die Signalleitungen ein Signal an den Batterietrennschalter und an die Generatorregelung gibt, so daß die Hochspannungsebene von ihrer Hochspannungsbatterie (1) getrennt wird und der Generator (3) heruntergeregelt wird.

2. Anordnung nach Anspruch 1, bei der die Spannungsbegrenzungseinheit (6), der Batterietrennschalter (4) und die Generratorregelung des Generators (3) über Signalleitungen mit einem Bordnetzsteuergerät (8) verbunden sind.

3. Anordnung nach Anspruch 2, bei der
- ein Hochspannungsleistungsverteiler (12) die Potentialverteilung auf die Leistungszweige (14) in der Hochspannungsebene (U2) schaltet,
- und der Hochspannungsleistungsverteiler (12) mit dem Bordnetzsteuergerät (8) über Signalleitungen verbunden ist.

4. Anordnung nach einem der Ansprüche 1 bis 3, bei der in der Spannungsbegrenzungseineheit (6) ein Leistungszweig mit mindestens einemOpferverbraucher (27, 28) enthalten ist.

5. Verfahren zum Schutz eines Mehrspannungsbordnetzes gegen Spannungskopplung zwischen einer Hochspannungsebene (U2) und einer Niederspannungsebene (U1) oder gegen Verpolung bei dem:
- eine Spannungsbegrenzungseinheit (6), die potentialmäßig zwischen der Niederspannungsebene und der elektrischen Masse geschaltet ist, bei einem unerwünschten Spannungsüberschlag die Spannung in der Niederspannungsebene mittels eines Opferverbrauchers (27,28) konstant hält,
- und bei einer unerwünschten Spannungskopplung die Spannungsquellen (1,3) in der Hochspannungsebene (U2) von einem Steuergerät (6, 8) abgeschaltet oder heruntergeregelt werden.

6. Verfahren nach Anspruch 5, bei dem das Steuergerät in der Signalbegrenzungseinheit (6) integriert ist.

7. Verfahren nach Anspruch 5, bei dem das Steuergerät ein Bordnetzsteuergerät (8) für das Lastmanagement im Bordnetz ist.

8. Verfahren nach einem der Ansprüch 5 bis 7, bei dem der Generator (3) im Falle eines Spannungsüberschlages abgeschaltet wird.

9. Verfahren nach einem der Ansprüche 5 bis 7, bei dem der Generator (3) im Falle eines Spannungsüberschlages mit seiner Ausgangsspannung zumindest auf die Nennspannung der Niederspannungsebene (U1) heruntergeregelt oder vollständig abgeregelt wird.

10. Verfahren nach Anspruch 7, bei dem das Bordnetzsteuergerät (8) mit einem Hochspannungsleistungsverteiler (12) in der Hochspannungsebene (U2) verbunden ist und im Falle eines Spannungsüberschlages:
- in einem ersten Schritt alle Leistungszweige (14) in der Hochspannungsebene (U2) abgeschaltet werden,
- in einem weiteren zweiten Schritt ein erster Leistungszweig (14) in der Hochspannungsebene wieder zugeschaltet wird und der Generator (3) mit seiner Ausgangsspannung über die Nennspannung der Niederspannungsebene hochgeregelt wird,
- in einem weiteren dritten Schritt die Spannung in der Niederspannungsebene (U1) überprüft wird,
- und die zweiten und dritten Schritte durch sukzessives Einschalten der weiteren Leistungszweige (14) in der Hochspannungsebene zyklisch wiederholt werden, bis nach dem Einschalten eines neu zugeschalteten Leistungszweiges in der Niederspannungsebene (U1) eine Spannungserhöhung eintritt und im Falle einer Spannungsüberhöhung dieser Leistungszweig abgeschaltet wird.

11. Verwendung des Verfahrens nach Anspruch 10 zur Lokalisierung eines unerwünschten Spannungsüberschlages oder Kurzschlusses zwischen einem der Leistungszweige (14) in der Hochspannungsebene (U2) und der Niederspannungsebene (U1).

12. Verwendung der Anordnung nach Anspruch 1 zum Schutz der Niederspannungsebene (U1) gegen Verpolung von außen.
